# EUROPÄISCHE PATENTANMELDUNG

(11) **EP 1 359 031 A2**
(43) Veröffentlichungstag der Anmeldung: **05.11.2003**
(21) Anmeldenummer: 03005972.9
(22) Anmeldetag: 18.03.2003
(51) Int. Cl.: B60G 3/18, B60G 7/02

(54) **Fahrgestell für ein Nutzfahrzeug**

(30) Priorität: 30.04.2002 DE 10219275
(71) Anmelder: DaimlerChrysler AG, 70567 Stuttgart (DE)
(72) Erfinder: Herrmann, Roland, 72657 Altenried (DE); Seidl, Wolfgang, 71672 Marbach (DE)

(57) **Zusammenfassung**

Die vorliegende Erfindung betrifft ein Fahrgestell für ein Nutzfahrzeug, insbesondere Lastkraftwagen, mit einem Frontmodul, das an jeder Fahrzeugseite ein Längsträgerteil aufweist, die über wenigstens einen Querträger miteinander verbunden sind, und mit einem Achsmodul, das einen U-Bügel aufweist, der die Längsträgerteile von unten und außen umgreift und der mit seinen U-Schenkeln an jeder Fahrzeugseite jeweils in einer ersten Kopplungszone der Längsträgerteile außen an den Längsträgerteilen befestigt ist. Das Achsmodul weist an jeder Fahrzeugseite eine Einzelradaufhängung auf, bei denen jeweils ein Radträger über einen unteren und einen oberen Dreiecksquerlenker gelagert ist. Jeder untere Dreiecksquerlenker ist mit seinem ersten Schenkel an einer U-Basis des Bügels und mit seinem zweiten Schenkel in einer zweiten Kopplungszone des jeweiligen Längsträgerteils gelagert. Sowohl die ersten Kopplungszonen als auch die zweiten Kopplungszonen sind für wenigstens zwei Kopplungskonfigurationen ausgebildet, in denen der U-Bügel an den ersten Kopplungszonen und die zweiten Schenkel der unteren Dreiecksquerlenker an den zweiten Kopplungszonen anbringbar sind und die sich hinsichtlich der vertikalen Bodenfreiheit der Längsträgerteile voneinander unterscheiden.

## Beschreibung

Die Erfindung betrifft ein Fahrgestell für ein Nutzfahrzeug, insbesondere für einen Lastkraftwagen.

Aus der DE 198 09 196 A1 ist ein Fahrgestell für ein schweres Nutzfahrzeug bekannt, das an jeder Fahrzeugseite einen Längsträger aufweist, die über mehrere Querträger miteinander verbunden sein können. An den Längsträgern ist eine Achseinheit oder ein Achsmodul zur Lagerung einer Starrachse angebracht. Das Achsmodul besitzt einen U-förmigen Bügel, der die Längsträger von unten und außen umgreift und der mit seinen U-Schenkeln außen an den Längsträgern befestigt ist. Das Achsmodul weist außerdem an jeder Fahrzeugseite einen Längslenker auf, die jeweils einerseits an einer am zugeordneten Längsträger befestigten Lagerkonsole schwenkbar gelagert sind und andererseits mit einem Starrachskörper fest verbunden sind. Des weiteren ist an jeder Fahrzeugseite jeweils ein Feder-/Dämpferbein angeordnet, die jeweils einerseits am Starrachskörper und andererseits an einem jochförmig ausgebildeten Ende des zugeordneten U-Schenkels abgestützt sind.

Die DE 35 22 851 C3 beschreibt ein Fahrzeug mit Einzelradaufhängung, bei dem jede Einzelradaufhängung mit einem pneumatisch arbeitenden Federbein ausgestattet ist. Bei einem pneumatischen Federbein stützt sich das jeweilige Rad über ein, beispielsweise durch einen Balg begrenztes Luftkissen oder Gasvoluemen am Fahrgestell ab. Das im Gasvolumen eingeschlossene kompressible Gas bildet dabei die Feder des Federbeins. Durch Zuführung oder Ablassen von Luft in das oder aus dem Gasvolumen kann beim bekannten Fahrzeug die Bodenfreiheit des Fahrzeugs gezielt vergrößert oder verringert werden.

Bei Nutzfahrzeugen werden unter anderem Straßenfahrzeuge von Baustellenfahrzeugen unterschieden, die insbesondere unterschiedliche Böschungswinkel und Bodenfreiheiten aufweisen. Die Herstellung unterschiedlicher Nutzfahrzeug-Typen ist mit einem relativ hohen Aufwand verbunden.

Die vorliegende Erfindung beschäftigt sich mit dem Problem, für ein Fahrgestell der eingangs genannten Art eine verbesserte Ausführungsform anzugeben, die es insbesondere vereinfacht, unterschiedliche Nutzfahrzeug-Typen auszubilden.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, ein Frontmodul, an dem das Achsmodul angebracht werden soll, so vorzubereiten bzw. auszubilden, dass für die Anbringung des Achsmoduls wenigstens zwei Konfigurationen vorgesehen sind, die sich hinsichtlich der Bodenfreiheit des Frontmoduls voneinander unterscheiden. Bei einer ersten Konfiguration wird das Achsmodul so am Frontmodul angebracht, dass sich eine relativ niedrige Bodenfreiheit ergibt, so dass sich das damit ausgestattete Fahrgestell zum Aufbau eines Straßenfahrzeugs oder Straßenrollers eignet. Im Unterschied dazu erfolgt bei einer zweiten Konfiguration die Anbringung des Achsmoduls am Frontmodul so, dass sich eine relativ hohe Bodenfreiheit ergibt, so dass sich das Fahrgestell dann für den Aufbau eines Baustellenfahrzeugs oder Baustellers besonders eignet. Von besonderer Bedeutung ist hierbei, dass zum Aufbau der beiden verschiedenen Nutzfahrzeugtypen, nämlich Straßenroller und Bausteller, das selbe Achsmodul und das selbe Frontmodul verwendet werden können, mit der Folge, dass auch sämtliche Anbauteile am Achsmodul und/oder am Frontmodul bei beiden Nutzfahrzeug-Typen nahezu identisch verwendet werden können. Die hierdurch erzielbaren Kostenvorteile liegen auf der Hand.

Die Erfindung benutzt ein mit Einzelradaufhängungen ausgestattetes Achsmodul, wobei die Einzelradaufhängungen jeweils obere und untere Dreiecksquerlenker aufweisen. Die unteren Dreiecksquerlenker stützen sich jeweils mit einem ersten Schenkel an einer U-Basis des Bügels und mit einem zweiten Schenkel am Frontmodul ab. Im Bereich dieser Abstützung oder Lagerung der zweiten Schenkel der unteren Dreiecksquerlenker kann das Frontmodul bei einer besonderen Ausführungsform einen Querstützträger aufweisen, der so positioniert ist, dass sich die zweiten Schenkel der unteren Dreieckequerlenker über diesen Querstützträger quer zur Fahrzeuglängsrichtung aneinander abstützen. Durch diese Maßnahme ergibt sich eine besonders hohe Steifigkeit, insbesondere Torsionssteifigkeit für das am Frontmodul angebrachte Achsmodul bzw. für den gesamten Frontbereich des Fahrgestells.

Das Frontmodul besitzt Längsträgerteile, die über wenigstens einen Querträger miteinander verbunden sind und an denen eine Brennkraftmaschine des Fahrzeugs und/oder eine Fahrerkabine gelagert werden können. An das Frontmodul schließt sich nach hinten ein Aufbau des Nutzfahrzeugs an, der üblicherweise zwei parallel zur Fahrzeuglängsrichtung verlaufende Aufbaulängsträger besitzt. Die Längsträgerteile des Frontmoduls sind zweckmäßig zum Befestigen der Aufbaulängsträger vorbereitet. Entsprechend einer besonderen Weiterbildung können die für die Anbindung der Aufbaulängsträger vorgesehenen Kopplungszonen der Längsträgerteile für wenigstens zwei Kopplungskonfigurationen ausgebildet bzw. vorbereitet sein, in denen die Aufbaulängsträger an diesen Kopplungszonen befestigbar sind und die sich hinsichtlich der vertikalen Bodenfreiheit der Aufbaulängsträger voneinander unterscheiden. Bei dieser Ausführungsform wird der Grundgedanke der Erfindung konsequent weitergeführt, um auch im Bereich des Fahrzeugaufbaus unterschiedliche Bodenfreiheiten für die unterschiedlichen Nutzfahrzeug-Typen bereitstellen zu können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine perspektivische Ansicht auf ein Fahrgestell nach der Erfindung,
- Fig. 2A und 2B: Seitenansichten auf das Fahrgestell gemäß Fig. 1 bei unterschiedlichen Kopplungskonfigurationen,
- Fig. 3A und 3B: vereinfachte Seitenansichten auf das Fahrgestell gemäß Fig. 1 bei zwei weiteren Kopplungskonfigurationen.

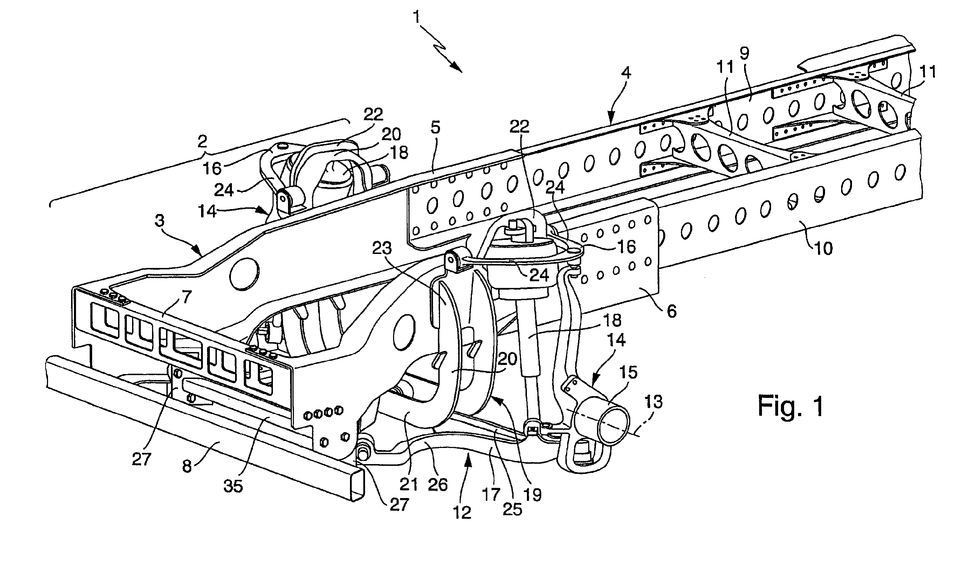

Entsprechend Fig. 1 weist ein erfindungsgemäßes Fahrgestell 1 eines im übrigen nicht gezeigten Nutzfahrzeugs, insbesondere eines schweren Lastkraftwagens, in einem durch eine geschweifte Klammer gekennzeichneten Frontbereich 2 ein Frontmodul 3 auf, das am vorderen Ende eines Aufbautragrahmens 4 angebracht ist. Das Frontmodul 3 besitzt an jeder Fahrzeugseite ein Längsträgerteil 5, 6, wobei die Längsträgerteile 5, 6 über einen stirnseitigen Querträger 7 miteinander verbunden sind. An diesen Längsträgerteilen 5, 6 sind beim fertiggestellten Nutzfahrzeug eine Brennkraftmaschine des Fahrzeugs sowie eine Fahrerkabine gelagert. An den vorderen Enden der Längsträgerteile 5, 6 ist unterhalb des Querträgers 7 ein als Unterfahrschutz dienender weiterer Querträger 8 angebracht.

Der Auftragrahmen 4 besteht im wesentlichen aus zwei Aufbaulängsträgern 9, 10, die über mehrere Querträger 11 miteinander verbunden sind. An diesen Aufbaulängsträgern 9, 10 ist im fertigen Zustand des Fahrzeugs ein Fahrzeugaufbau gelagert.

Die Längsträgerteile 5,6 des Frontmoduls 3 sind an ihren hinteren Enden mit den vorderen Enden der Aufbaulängsträger 9, 10 fest verbunden. Der modulare Aufbau des Frontmoduls 3 ermöglicht es dabei, das Frontmodul 3 und den Aufbautragrahmen 4 unabhängig voneinander im Rahmen einer Vormontage aufzubauen. In einer anschließenden Endmontage können dann die für sich komplettierten Baugruppen, also Frontmodul 3 und Aufbautragrahmen 4 zusammengebaut werden.

Das erfindungsgemäße Fahrgestell 1 besitzt zumindest im Frontbereich 2 ein Achsmodul 12, an dem eine Vorderachse 13 des Fahrzeugs ausgebildet ist. Das Achsmodul 12 besitzt auf jeder Fahrzeugseite eine Einzelradaufhängung 14 für die nicht gezeigten Räder der Vorderachse 13. Jede Einzelradaufhängung 14 umfasst einen Radträger 15, einen oberen Dreiecksquerlenker 16, einen unteren Dreiecksquerlenker 17 und ein Feder- und/oder Dämpferbein 18.

Das Achsmodul 12 weist außerdem einen U-förmigen Bügel 19 auf, der zwei U-Schenkel 20 und eine U-Basis 21 umfasst. Dabei sind die U-Schenkel 20 und die U-Basis 21 jeweils doppelt ausgeführt, wobei die Teilschenkel an den freien Enden der U-Schenkel 20 jeweils über ein Joch 22 miteinander verbunden sind. Die U-Basis 21 verbindet die beiden U-Schenkel 20 miteinander. Der Bügel 19 ist quer zur Fahrzeuglängsrichtung ausgerichtet, so dass sich seine U-Basis 21 quer zur Fahrzeuglängsrichtung erstreckt. Die U-Schenkel 20 umgreifen an jeder Fahrzeugseite das jeweils zugeordnete Längsträgerteil 5 bzw. 6 von unten und von außen. Der Bügel 19 ist an seinen U-Schenkeln 20 am jeweiligen Längsträgerteil 5, 6 jeweils in einer ersten Kopplungszone 23 befestigt. Über den Bügel 19 ist somit das Achsmodul 12 am Frontmodul 3 befestigt.

Das Achsmodul 12 kann unabhängig vom Frontmodul 3 im Rahmen einer Vormontage aufgebaut werden. Beim Zusammenbau kann dann das komplette Achsmodul 12 am Frontmodul 3 angebaut werden.

Jeder obere Dreiecksquerlenker 16 weist zwei Schenkel 24 auf, die beide am jeweils zugeordneten U-Schenkel 20 des Bügels 19 schwenkbar gelagert sind. Jeder untere Dreiecksquerlenker 17 besitzt einen ersten Schenkel 25 und einen zweiten Schenkel 26. Mit dem ersten Schenkel 25 ist der jeweilige untere Dreiecksquerlenker 17 an der U-Basis 21 des Bügels 19 schwenkbar gelagert, während er mit seinem zweiten Schenkel 26 jeweils im Bereich einer zweiten Kopplungszone 27 direkt oder indirekt am jeweiligen Längsträgerteil 5, 6 schwenkbar gelagert ist.

An den Radträgern 15 sind die Räder der Vorderachse 13 gelagert, wobei jeder Radträger 15 seinerseits an den Dreiecksquerlenkern 16, 17 gelagert ist. Die Feder- und/oder Dämpferbeine 18 stützen sich einerseits am unteren Dreiecksquerlenker 17 und andererseits am Joch 22 der U-Schenkel 20 ab.

Die Feder- und/oder Dämpferbeine 18 können beispielsweise hydraulisch und/oder pneumatisch arbeiten. Üblicherweise werden mit Hilfe eines derartigen Feder- und/oder Dämpferbeins 18 für das jeweilige Fahrzeugrad ein Einfederweg und ein Ausfederweg realisiert, die zusammen einen Gesamtfederweg bilden. Bei einem aktiven Feder- und/oder Dämpferbein 18 kann beispielsweise der Gesamtfederweg variiert werden. Zusätzlich oder alternativ kann bei einem aktiven Feder- und/oder Dämpferbein 18 z.B. das Verhältnis zwischen Einfederweg und Ausfederweg variiert werden, im Extremfall zwischen 0% und 100%. Mit Hilfe derartiger aktiver Feder- und/oder Dämpferbeine 18 ist es insbesondere möglich, die vertikale Bodenfreiheit des Fahrzeug gezielt zu verändern. Beispielsweise kann durch eine Vergrößerung des Einfederwegs die Bodenfreiheit erhöht werden. Beispielsweise kann auf diese Weise bei einem Baustellenfahrzeug die Bodenfreiheit für den Baustellenbetrieb erhöht und für den Straßenbetrieb reduziert werden. Im Extremfall kann beispielsweise zum Überfahren von Hindernissen - zweckmäßig in Schrittgeschwindigkeit - der Ausfederweg auf Null reduziert werden, um eine maximale Bodenfreiheit zu erreichen.

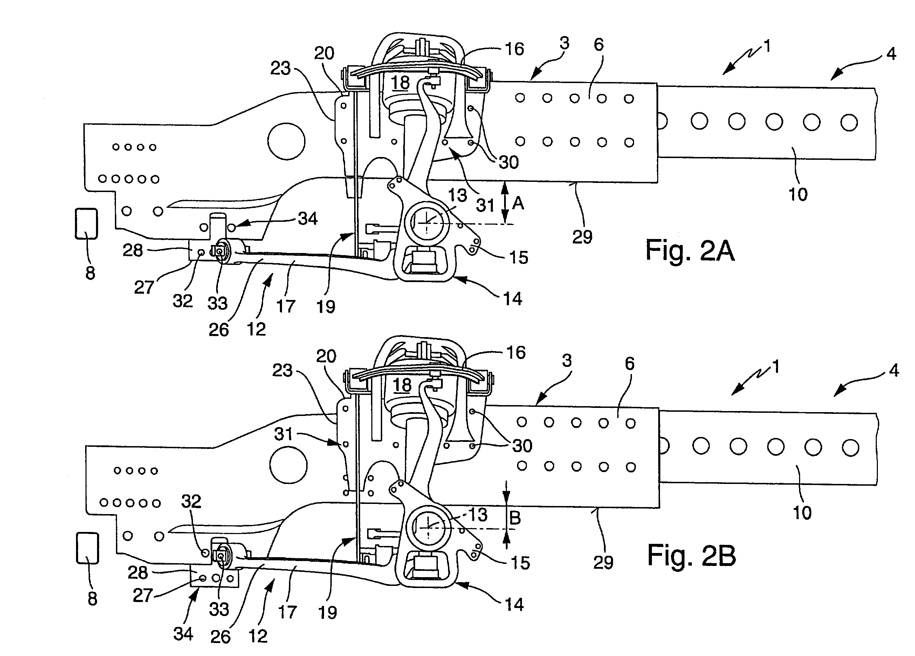

Entsprechend den Fig. 2A und 2B sind erfindungsgemäß die erste Kopplungszone 23 und die zweite Kopplungszone 27 jeweils für mindestens zwei Kopplungskonfigurationen vorbereitet bzw. ausgebildet, in denen das Achsmodul 12 am Frontmodul 3 angebaut werden kann. In den Fig. 2A und 2B sind zwei verschiedene Anbau- bzw. Kopplungskonfigurationen zwischen Achsmodul und Frontmodul 3 wiedergegeben. Diese beiden Kopplungskonfigurationen unterscheiden sich durch die dabei für die Längsträgerteile 5 und 6 entstehende Bodenfreiheit in vertikaler Richtung.

In der Konfiguration gemäß Fig. 2A sind die U-Schenkel 20 des Bügels 19 in den ersten Kopplungszonen 23 in einer unteren Position an den Längsträgerteilen 5, 6 befestigt. In entsprechender Weise ist auch an jeder Fahrzeugseite der zweite Schenkel 26 des unteren Dreiecksquerlenkers 17 in der zweiten Kopplungszone 17 in einer unteren Position am jeweiligen Längsträgerteil 5, 6 befestigt. Bei der hier gezeigten Ausführungsform erfolgt die Befestigung des unteren Dreiecksquerlenkers 17 am Längsträgerteil 5, 6 dabei indirekt über eine Trägerplatte 28, die ihrerseits am jeweiligen Längsträgerteil 5, 6 befestigt ist. In dieser Konfiguration besitzt die Vorderachse 13 einen relativ großen Abstand A zu einer Unterkante 29 des jeweiligen Längsträgerteils 6. Dementsprechend besitzen auch die Längsteilerteile 5, 6 bzw. das komplette Fahrgestell 1 eine relativ große vertikale Bodenfreiheit. Da durch die gewählte Kopplungs-Konfiguration das komplette Frontmodul 3 in seinem Bodenabstand bestimmt ist, geht eine vergrößerte Bodenfreiheit automatisch mit einer Vergrößerung des Böschungswinkels des Fahrgestells 1 bzw. des damit ausgestatteten Fahrzeugs einher.

Im Unterschied dazu ist bei der in Fig. 2B dargestellten zweiten Kopplungskonfiguration das Achsmodul 12 relativ weit oben am Frontmodul 3 befestigt. Dementsprechend sind die U-Schenkel 20 in der ersten Kopplungszone 23 in einer oberen Position an den jeweiligen Längsträgerteilen 5,6 befestigt. Ebenso sind bei den unteren Dreiecksquerlenkern 17 die zweiten Schenkel 26 jeweils in der zweiten Kopplungszone 27 in einer unteren Position am jeweiligen Längsträgerteil 6 befestigt. Bei dieser Ausführungsform erfolgt die Befestigung des zweiten Schenkels 26 dabei direkt am Längsträgerteil 6. Da gemäß Fig. 2B das Achsmodul 12 weiter oben am Frontmodul 3 befestigt ist, ergibt sich zwischen der Vorderachse 13 und der Unterkante 29 der Längsträgerteile 5, 6 ein Abstand B, der erkennbar kleiner ist als der Abstand A bei der Konfiguration gemäß Fig. 2A. In entsprechender Weise reduzieren sich auch die Bodenfreiheit der Längsträgerteile 5, 6 bzw. des Fahrgestells 1 sowie der Böschungswinkel des Fahrzeugs.

Bei der hier gezeigten bevorzugten Ausführungsform sind die U-Schenkel 20 mittels einer ersten Verschraubung 30 an den jeweiligen Längsträgerteilen 5, 6 befestigt. Zur Bereitstellung der beiden Kopplungskonfigurationen sind die ersten Kopplungszonen 23 jeweils mit einem ersten Lochmuster 31 ausgestattet, das eine Rasterung besitzt, mit deren Hilfe die gewünschten Kopplungskonfigurationen realisierbar sind.

In entsprechender Weise ist hier der zweite Schenkel 26 des unteren Dreiecksquerlenkers 16 mittels einer zweiten Verschraubung 32 am jeweiligen Längsträgerteil 5, 6 befestigt. Dabei ist diese Verschraubung 32 an einem Lager 33 des zweiten Schenkels 26 ausgebildet. Zur Bereitsstellung der gewünschten Kopplungskonfigurationen weisen die zweiten Kopplungszonen 27 ein zweites Lochmuster 34 auf, das entsprechend den gewünschten Kopplungskonfigurationen gerastert ist.

Bezug nehmend auf Fig. 1 kann eine besonders vorteilhafte Variante des Fahrgestells 1 im Bereich der zweiten Kopplungszonen 27 einen sich zwischen den Längsträgerteilen 5, 6 des Frontmoduls 3 erstreckenden Querstützträger 35 aufweisen, über den die beiden gegenüberliegenden zweiten Kopplungszonen 27 quer zur Fahrzeuglängsrichtung aneinander abgestützt sind. Dementsprechend sind auch die zweiten Schenkel 26 der unteren Dreiecksquerlenker 17 über diesen Querstützträger 35 quer zur Fahrzeuglängsrichtung aneinander abgestützt. Die Integration dieses Querstützträgers 35 erhöht die Stabilität und Steifigkeit des Frontmoduls 3, wodurch die Funktionssicherheit der Einzelradaufhängungen 14 erhöht ist.

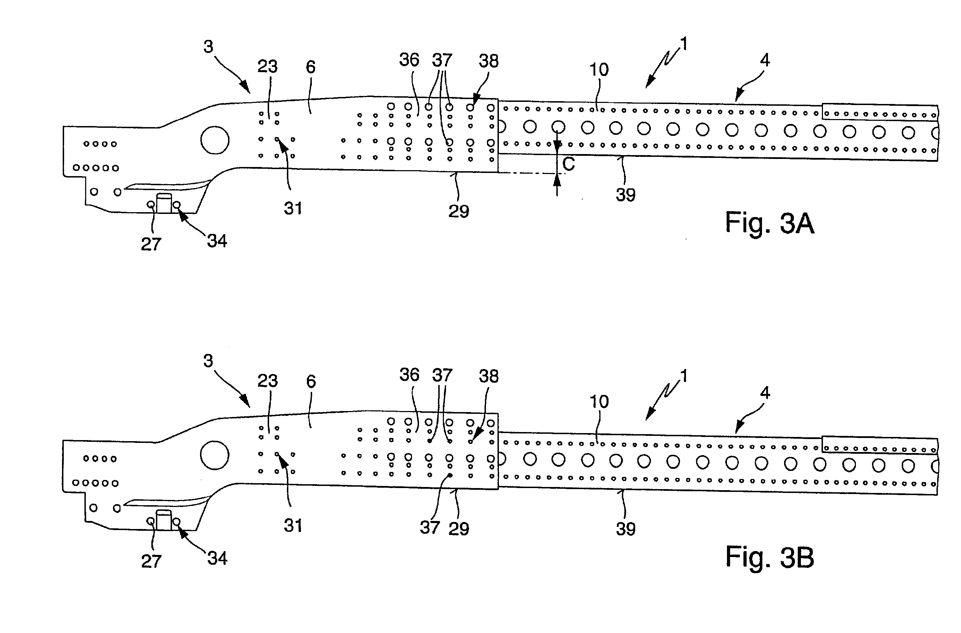

Entsprechend den Fig. 3A und 3B ist für die Anbringung der Aufbaulängsträger 9, 10 an den Längsträgerteilen 5, 6 des Frontmoduls 3 jeweils eine dritte Kopplungszone 36 ausgebildet, wobei diese dritten Kopplungszonen 36 ebenfalls für wenigstens zwei Kopplungskonfigurationen vorbereitet sind. Zweckmäßig erfolgt die Befestigung der Längsträgerteile 5, 6 an den Aufbaulängsträgern 9, 10 mittels einer dritten Verschraubung 37, wobei die dritte Kopplungszone 36 für diese dritte Verschraubung 37 jeweils ein drittes Lochmuster 38 aufweist. Dieses dritte Lochmuster 38 besitzt seinerseits eine Rasterung, die auf die gewünschten Konfigurationen für die Anbindung bzw. Kopplung zwischen Aufbaulängsträgern 9, 10 und Längsträgerteilen 5, 6 abgestimmt ist.

Bei der Kopplungskonfiguration gemäß Fig. 3A ist der gezeigte Aufbaulängsträger 10 relativ weit oben in der dritten Kopplungszone 36 am jeweiligen Längsträgerteil 6 befestigt. Hierdurch ergibt ein Abstand C zwischen der Unterseite 29 des Längsträgerteils 6 und einer Unterseite 39 des Aufbaulängsträgers 10. Im Bereich des Aufbautragrahmens 4 besitzt das Fahrgestell 1 bei dieser Konfiguration eine relativ hohe Bodenfreiheit.

Bei der Konfiguration gemäß Fig. 3B ist der gezeigte Aufbaulängsträger 10 relativ weit unten in der dritten Kopplungszone 36 am zugehörigen Längsträgerteil 6 befestigt. In dieser Konfiguration ist der Abstand C zwischen den Unterseiten 29 und 39 des Längsträgerteils 6 bzw. des Aufbaulängsträgers 10 quasi eliminiert. Dementsprechend reduziert sich in dieser Konfiguration die Bodenfreiheit des Aufbautragrahmens 4. Jedoch bietet diese zweite Konfiguration gemäß Fig. 3B die Möglichkeit, den Aufbau des damit ausgestatteten Nutzfahrzeugs höher und somit mit einem größeren Ladevolumen auszubilden.

## Patentansprüche

1. Fahrgestell für ein Nutzfahrzeug, insbesondere Lastkraftwagen,
- mit einem Frontmodul (3), das an jeder Fahrzeugseite ein Längsträgerteil (5, 6) aufweist, die über wenigstens einen Querträger (7) miteinander verbunden sind und die zur Lagerung einer Brennkraftmaschine und/oder einer Fahrerkabine dienen,
- mit einem Achsmodul (12), das einen U-förmigen Bügel (19) aufweist, der die Längsträgerteile (5, 6) von unten und außen umgreift und der mit seinen U-Schenkeln (20) an jeder Fahrzeugseite jeweils in einer ersten Kopplungszone (23) der Längsträgerteile (5, 6) außen an den Längsträgerteilen (5, 6) befestigt ist,
- wobei das Achsmodul (12) an jeder Fahrzeugseite eine Einzelradaufhängung (14) aufweist, bei denen jeweils ein Radträger (15) über einen unteren Dreiecksquerlenker (17) und einen oberen Dreiecksquerlenker (16) am Achsmodul (12) gelagert ist,
- wobei jeder untere Dreiecksquerlenker (17) mit seinem ersten Schenkel (25) an einer die U-Schenkel (20) miteinander verbindenden U-Basis (21) des Bügels (19) und mit seinem zweiten Schenkel (26) in einer zweiten Kopplungszone (27) des jeweiligen Längsträgerteils (5, 6) am Längsträgerteil (5, 6) gelagert ist,
- wobei jeder obere Dreiecksquerlenker (16) mit seinen beiden Schenkeln (24) an einem der U-Schenkel (20) des Bügels (19) gelagert ist,
- wobei sowohl die ersten Kontakzonen (23) als auch die zweiten Kontaktzonen (27) für wenigstens zwei Kopplungskonfigurationen ausgebildet sind, in denen der Bügel (19) an den ersten Kopplungszonen (23) und die zweiten Schenkel (26) der unteren Dreiecksquerlenker (17) an den zweiten Kopplungszonen (27) anbringbar sind und die sich hinsichtlich der vertikalen Bodenfreiheit der Längsträgerteile (5, 6) voneinander unterscheiden.

2. Fahrgestell nach Anspruch 1,
**dadurch gekennzeichnet,**
**dass** das Achsmodul (12) eine unabhängig vom Frontmodul (3) vormontierbare Einheit bildet, die zum Anbau an das Frontmodul (3) unter Berücksichtigung der jeweiligen Kopplungskonfiguration in den ersten Kopplungszonen (23) und den zweiten Kopplungszonen (27) mit den Längsträgerteilen (5,6) verbunden ist.

3. Fahrgestell nach Anspruch 1 oder 2,
**dadurch gekennzeichnet,**
**dass** die U-Schenkel (20) mittels einer ersten Verschraubung (30) an den ersten Kopplungszonen (23) befestigt sind.

4. Fahrgestell nach Anspruch 3,
**dadurch gekennzeichnet,**
**dass** die ersten Kopplungszonen (23) jeweils ein erstes Lochmuster (31) zur Ausbildung der ersten Verschraubung (30) aufweisen, das jeweils entsprechend den Kopplungskonfigurationen gerastert ist.

5. Fahrgestell nach einem der Ansprüche 1 bis 4,
**dadurch gekennzeichnet,**
**dass** die zweiten Schenkel (26) der unteren Dreiecksquerlenker (17) jeweils ein Lager (33) aufweisen, das mittels einer zweiten Verschraubung (32) an der jeweiligen zweiten Kontaktzone (27) befestigt ist.

6. Fahrgestell nach Anspruch 5,
**dadurch gekennzeichnet,**
**dass** die zweiten Kontaktzonen (27) jeweils ein zweites Lochmuster (34) zur Ausbildung der zweiten Verschraubung (32) aufweisen, das jeweils entsprechend den Kopplungskonfigurationen gerastert ist.

7. Fahrgestell nach einem der Ansprüche 1 bis 6,
**dadurch gekennzeichnet,**
**dass** die Längsträgerteile (5, 6) im Bereich der zweiten Kontaktzonen (27) über einen Querstützträger (35) aneinander abgestützt sind, der so positioniert ist, dass sich die zweiten Schenkel (26) der unteren Dreiecksquerlenker (17) über diesen Querstützträger (35) quer zur Fahrzeuglängsrichtung aneinander abstützen.

8. Fahrgestell nach Anspruch 7,
**dadurch gekennzeichnet,**
**dass** die zweiten Schenkel (26) der unteren Dreiecksquerlenker (17) wenigstens in einer der Kopplungskonfigurationen direkt am Querstützträger (35) befestigt sind, der seinerseits an den Längsträgerteilen (5, 6) befestigt ist.

9. Fahrgestell nach einem der Ansprüche 1 bis 8,
**dadurch gekennzeichnet,**
**dass** das Achsmodul (12) auf jeder Fahrzeugseite ein Feder- und/oder Dämpferbein (18) aufweist, das sich jeweils einerseits am U-Schwenkel (20) des Bügels (19) und andererseits am Radträger (15) und/oder am unteren Dreiecksquerlenker (17) abstützt.

10. Fahrgestell nach einem der Ansprüche 1 bis 9,
**dadurch gekennzeichnet,**
**dass** die Längsträgerteile (5, 6) des Frontmoduls (3) jeweils eine dritte Kopplungszone (36) aufweisen, in denen Aufbaulängsträger (9, 10) befestigt sind, die zur Abstützung eines Fahrzeugaufbaus dienen.

11. Fahrgestell nach Anspruch 10,
**dadurch gekennzeichnet,**
**dass** die dritten Kontaktzonen (36) für wenigstens zwei Kopplungskonfigurationen ausgebildet sind, in denen die Aufbaulängsträger (9, 10) in den dritten Kopplungszonen (36) an den Längsträgerteilen (5, 6) befestigbar sind und die sich hinsichtlich der vertikalen Bodenfreiheit der Aufbaulängsträger (9, 10) voneinander unterscheiden.

12. Fahrgestell nach Anspruch 11,
**dadurch gekennzeichnet,**
**dass** die Aufbaulängsträger (9, 10) mittels einer dritten Verschraubung (37) an den Längsträgerteilen (5, 6) befestigt sind, wobei die dritten Kontaktzonen (36) jeweils ein drittes Lochmuster (38) zur Ausbildung der dritten Verschraubung (37) aufweisen, das jeweils entsprechend den Kopplungskonfigurationen gerastert ist.
